# EUROPÄISCHE PATENTSCHRIFT

(11) **EP 2 531 813 B1**
(45) Veröffentlichungstag und Bekanntmachung des Hinweises auf die Patenterteilung: **27.05.2015**
(21) Anmeldenummer: 11702152.7
(22) Anmeldetag: 01.02.2011
(51) Int. Cl.: G01C 19/56

(54) **CORIOLISKREISEL MIT KORREKTUREINHEITEN UND VERFAHREN ZUR REDUKTION DES QUADRATURBIAS**
CORIOLIS GYROSCOPE HAVING CORRECTION UNITS AND METHOD FOR REDUCING THE QUADRATURE BIAS
GYROSCOPE À EFFET CORIOLIS MUNI D'UNITÉS DE CORRECTION ET PROCÉDÉ DE RÉDUCTION DU BIAIS EN QUADRATURE

(30) Priorität: 02.02.2010 DE 102010006584
(43) Veröffentlichungstag der Anmeldung: 12.12.2012
(73) Patentinhaber: Northrop Grumman LITEF GmbH, 79115 Freiburg (DE)
(72) Erfinder: GEIGER, Wolfram, 79285 Ebringen/DE (DE); LEINFELDER, Peter, 79238 Ehrenkirchen (DE)
(74) Vertreter: Müller Hoffmann & Partner
(86) Internationale Anmeldenummer: PCT/EP2011/000444
(87) Internationale Veröffentlichungsnummer: WO 2011/095317

(56) Entgegenhaltungen:
- DE-A1-102007 030 120
- US-A1- 2007 144 255
- US-B1- 6 250 156
- US-B1- 7 051 590

## Beschreibung

Die Erfindung betrifft einen Corioliskreisel mit Korrektureinheiten zur Reduktion des Quadraturbias, ein System aus miteinander gekoppelten Corioliskreiseln, das Korrektureinheiten zur Reduktion des Quadraturbias umfasst, und Verfahren zur Reduktion des Quadraturbias.

Corioliskreisel (Vibrationskreisel, Vibrationsgyroskop, Drehratensensoren) umfassen ein einteiliges, in der Regel jedoch ein mehrteiliges Massensystem, das in Schwingungen versetzt wird. Dazu wird zum Betrieb des Corioliskreisels ein erster Schwingungsmode (Anregungsschwingung) des Massensystems angeregt. Wird der Corioliskreisel einer Drehbewegung in seiner sensitiven Achse unterworfen, so regen die auftretenden Corioliskräfte einen zweiten Schwingungsmode des Massensystems an, der direkt oder indirekt erfasst wird, wobei ein den zweiten Schwingungsmode abbildendes Auslesesignal gewonnen wird. Das Auslesesignal wird auf Änderungen in der Amplitude hin ausgewertet, die ein Maß für die am Corioliskreisel anliegende Drehrate darstellt. In einem Corioliskreisel nach einem Closed-Loop-System wird über einen Regelkreis die Amplitude der Ausleseschwingung fortlaufend auf einen festen Wert, beispielsweise Null, zurückgestellt, so dass die anliegende Drehrate aus den dazu erforderlichen Rückstellkräften abgeleitet wird.

Das Massensystem des Corioliskreisels kann als ein einteiliges oder als ein mehrteiliges Massensystem ausgebildet sein. Beispielsweise umfasst das Massensystem zwei Teilmassen (Schwinger), die miteinander über ein Federsystem gekoppelt sind und Relativbewegungen zueinander ausführen können. Bei einem mehrteiligen Massensystem können Fertigungstoleranzen zu einer Fehlausrichtung von miteinander gekoppelten Teilmassen des Massensystems zueinander führen, beispielsweise der beiden Schwinger eines zweiteiligen Einzelschwingers. Die Fehlausrichtung erzeugt im Auslesesignal des Corioliskreisels einen Signalanteil, der in Quadratur (90° phasenversetzt) dem eigentlichen Signalanteil aus der anliegenden Drehrate überlagert ist. In der Regel sind die Quadratursignalanteile (Quadraturbias, Quadratursignal, Quadraturfehler) viel größer als die aus der gewünschten Drehratenauflösung, sodass die Separation beider Signalanteile schwierig ist. Durch die große Differenz der Signalanteile führen schon kleine Phasenschiebungen zu deutlich merkbaren Fehlern im Drehratensignal (Null-Punkt-Fehler, Bias).

Aus der DE 103 60 962 B4 und der DE 102 37 410 A1 sind Verfahren bekannt, bei denen die Coriolismasse mit Hilfe einer an spezielle Stellelektroden angelegten Spannung gedreht und/oder ausgelenkt wird, um den Quadraturbias zu reduzieren.

In der US 6,067,858 wird eine Struktur zur Reduzierung des Quadraturbiases beschrieben, die aus einzelnen Korrekturelektroden besteht, bei denen symmetrische Abstände zwischen den einzelnen Elektroden vorliegen müssen. Außerdem kann diese Strukturform fertigungstechnisch nur mit vergrabenen Oxiden realisiert werden.

Dokument US 7051590 offenbart einen Corioliskreisel nach dem Oberbegriff des Anspruchs 1.

Die der Erfindung zugrunde liegende Aufgabe ist es, in Corioliskreiseln und in Systemen aus miteinander gekoppelten Corioliskreiseln den Beitrag von Fehlausrichtungen zum Quadraturbias zu reduzieren, ohne die Coriolismasse drehen und/oder auslenken zu müssen und fertigungstechnisch auf vergrabene Oxide verzichten zu können.

Diese Aufgabe wird erfindungsgemäß durch einen Corioliskreisel entsprechend dem Anspruch 1, durch ein System entsprechend Anspruch 9 und durch Verfahren entsprechend dem Anspruch 15 gelöst. Vorteilhafte Weiterbildungen ergeben sich jeweils aus abhängigen Ansprüchen.

Demnach umfasst ein Corioliskreisel ein Massensystem, das zu Schwingungen parallel zu einer ersten Achse anregbar ist. Das Massensystem kann einstückig ausgebildet sein oder mindestens zwei Teilmassen umfassen. Bei mehrteiligen Massensystemen ist mindestens eine der Teilmassen (Corioliselement) derart befestigt, dass eine Auslenkung der Teilmasse durch eine Drehbewegung um eine zur ersten Achse senkrechte sensitive Achse entlang einer zur ersten und zur sensitiven Achse senkrechten zweiten Achse nachweisbar ist. Die Auslenkung der Teilmasse kann in einem Closed-Loop-System beispielsweise über das Erzeugen von Rückstellkräften zur Kompensation der Auslenkung nachweisbar sein.

Der erfindungsgemäße Corioliskreisel umfasst weiterhin mindestens eine erste Korrektureinheit und mindestens eine zweite Korrektureinheit, die jeweils eine Mehrzahl von feststehenden Korrekturelektroden und eine Mehrzahl von bewegten Korrekturelektroden umfassen. Die feststehenden Korrekturelektroden erstrecken sich in Richtung der ersten Achse und sind über zugehörige Ankerstrukturen fest mit einem Substrat verbunden, gegenüber dem das Massensystem beweglich aufgehängt ist. Die bewegten Korrekturelektroden sind integraler Bestandteil des Massensystems und gegenüber dem Substrat beweglich.

Beispielsweise umfasst der Corioliskreisel eine erste Teilmasse (Antriebsrahmen), die zu einer linearen Schwingung entlang der ersten Achse angeregt wird, und eine zweite, mit der ersten Teilmasse beweglich verbundene zweiten Teilmasse (Coriolisrahmen, Coriolismasse, Detektionsrahmen), die bezüglich der ersten Teilmasse so verbunden ist, dass sie senkrecht zur Anregungsbewegung beweglich ist, wobei diese mögliche Auslenkbewegung entlang der Richtung der Corioliskräfte, die auf Grund des Anliegens einer Drehrate und der Anregungsbewegung entstehen, nachweisbar ist. Die zweite Teilmasse umfasst dabei die bewegten Korrekturelektroden sowie einen Detektionselektrodensatz, der zum Nachweis der Auslenkung der zweiten Teilmasse dient, und optional einen Elektrodensatz zur Rückstellung der Auslenkung.

Nach einer anderen Ausführungsform umfasst der Corioliskreisel eine erste Teilmasse (Antriebsrahmen), die zu einer linearen Schwingung entlang der ersten Achse angeregt wird, eine zweite Teilmasse (Coriolisrahmen, Coriolismasse), die durch die Corioliskraft auslenkbar befestigt ist, und eine dritte Teilmasse (Detektionsrahmen), die mit der zweiten Teilmasse so beweglich verbunden ist, dass sie die Anregungsbewegung nicht ausführen kann, aber die Auslenkbewegung des Coriolisrahmens in die zweite Richtung mitmachen muss, worüber die Auslenkung des Coriolisrahmens detektiert wird. Mit anderen Worten, die Funktionseinheit Coriolisrahmen und Detektionsrahmen wird separiert. Die bewegten Korrekturelektroden der Korrektureinheiten sind dabei fester Bestandteil des Coriolisrahmens. Die Elektrodensätze für die Detektion und/oder Rückstellung werden dabei in der Regel der dritten Teilmasse zugeordnet, wobei bei Verwendung von getrennten Elektrodensätzen für Detektion und Rückstellung die Möglichkeit besteht, diese auch separiert auf der dritten und zweiten Teilmasse anzuordnen.

Die erfindungsgemäßen Korrektureinheiten umfassen beispielsweise jeweils eine gleiche Anzahl von ersten feststehenden Korrekturelektroden und zweiten feststehenden Korrekturelektroden. Die ersten feststehenden Korrekturelektroden erstrecken sich ausgehend von der zugehörigen Ankerstruktur entlang der ersten Achse in eine erste Richtung. Die zweiten feststehenden Korrekturelektroden erstrecken sich von der zugehörigen Ankerstruktur aus in eine der ersten Richtung entgegen gerichtete zweite Richtung. In entsprechender Weise kann die Korrektureinheit eine gleiche Anzahl von ersten und zweiten bewegten Korrekturelektroden umfassen. Die ersten bewegten Korrekturelektroden erstrecken sich, ausgehend von einem Bezugspunkt innerhalb des Umfangs derjenigen Teilmasse, deren integraler Bestandteil sie sind, in die zweite Richtung und die zweiten bewegten Korrekturelektroden in die erste Richtung.

Der Abstand einer feststehenden Korrekturelektrode zu ihren jeweiligen benachbarten bewegten Korrekturelektroden ist verschieden. Das Verhältnis der beiden Abstände ist also ungleich 1 zu wählen. Dabei ist für eine effektive Kraftwirkung das Verhältnis möglichst groß oder klein zu wählen, allerdings wächst dann der Platzbedarf. Bei Berücksichtigung eines mit dem Abstandsverhältnis skalierenden Platzbedarfs und einer möglichst effektiven Kraftwirkung ergibt sich ein optimales Verhältnis der Abstände von √2. Diejenige bewegte Korrekturelektrode, die einen kleineren Abstand zu der feststehenden Korrekturelektrode aufweist, wird im Folgenden als die der feststehenden Korrekturelektrode zugeordnete bewegte Korrekturelektrode bezeichnet. Die ersten feststehenden Korrekturelektroden sind entlang der zweiten Achse jeweils oberhalb der ihnen zugeordneten ersten bewegten Korrekturelektroden angeordnet, während die zweiten feststehenden Korrekturelektroden jeweils unterhalb der ihnen zugeordneten zweiten bewegten Korrekturelektroden angeordnet sind. Dabei beziehen sich die Begriffe "oberhalb" und "unterhalb" auf eine Richtung entlang der zweiten Achse. Die Teilmasse, die die bewegten Korrekturelektroden umfasst, ist derart ausgeformt, dass sie jeweils als eine erste und eine zweite bewegte Korrekturelektrode in Bezug auf eine erste bzw. eine zweite feststehende Korrekturelektrode dient. Die Anordnung der feststehenden Korrekturelektroden bezüglich der ihnen jeweils zugeordneten bewegten Korrekturelektroden entlang der zweiten Achse kann auch invertiert sein.

In einer Ausführungsform umfasst der Corioliskreisel eine erste und eine zweite Korrektureinheit, die invertiert zueinander ausgebildet sind. Optional kann der Corioliskreisel mehrere gleichartig ausgebildete erste und/oder mehrere gleichartig ausgebildete zweite Korrektureinheiten oder auch mehrere Paare von invertiert zueinander ausgebildeten ersten und zweiten Korrektureinheiten umfassen.

Die feststehenden Korrekturelektroden und/oder die bewegten Korrekturelektroden können jeweils Stege mit einer Breite von maximal 10 µm aufweisen.

In einer Ausführungsform weist der Corioliskreisel mindestens eine Steuereinheit auf, die eine Korrekturspannung erzeugt. Die feststehenden Korrekturelektroden und die bewegten Korrekturelektroden sind mit der mindestens einen Steuereinheit verbunden, wobei unterschiedliche Korrektureinheiten separat mit unterschiedlichen Korrekturspannungen angesteuert bzw. geregelt werden können. Die Korrekturspannungen sind zumindest zeitweise konstant und im einfachsten Fall Gleichspannungen, deren Beträge derart einstellbar sind, dass ein Quadraturbias minimiert wird. Es ist allerdings auch möglich, die Korrekturspannungen in Abhängigkeit von der Auslenkung senkrecht zur Anregungsbewegung (y-Richtung) zu regeln. Die Elektroden der Korrektureinheiten sind so ausgebildet, dass bei einer Bewegung der beweglichen Elektrodenteile in Anregungsrichtung bei Anliegen einer elektrischen Spannung Kräfte in der Detektionsrichtung erzeugt werden, die von der Auslenkung in Anregungsrichtung abhängig sind.

Die Erfindung stellt weiterhin Systeme mit mindestens zwei miteinander gekoppelten Corioliskreiseln bereit, wobei jeder Corioliskreisel ein Massensystem umfasst, das zu Schwingungen parallel zu einer ersten Achse anregbar ist, wobei eine Auslenkung des Massensystems aufgrund einer Corioliskraft entlang einer zweiten Achse, die senkrecht zu der ersten Achse verläuft, nachweisbar ist. Das System umfasst dabei mindestens eine erste und mindestens eine zweite Korrektureinheit, wie sie mit Bezug auf den einzelnen Corioliskreisel beschrieben sind.

Beispielsweise umfasst ein System zwei Corioliskreisel, die zusammen als linearer Doppelschwinger ausgebildet sind, wobei die beiden Einzelschwinger zu entlang der ersten Achse einander gegenläufigen Schwingungen angeregt werden.

Bei einer Ausführungsform, in der die Corioliskreisel nur bezüglich der Anregung gekoppelt sind, sind in jedem einzelnen Corioliskreisel die Korrektureinheiten jeweils paarweise in invertierter Ausführung zueinander angeordnet.

Sind die einzelnen Corioliskreisel hingegen auch in der Detektion gekoppelt, wie dies beispielsweise aus der DE 10 2007 030 120 A1 bekannt ist, so können die mindestens zwei invertiert zueinander angeordneten separaten Korrektureinheiten beliebig auf den einzelnen Corioliskreiseln angeordnet werden.

Die erfindungsgemäßen Verfahren zur Reduktion des Quadraturbias eines erfindungsgemäßen Corioliskreisels oder eines erfindungsgemäßen Systems umfassen das Anlegen einer Korrekturspannung zwischen feststehenden und bewegten Korrekturelektroden der Korrektureinheiten.

Die Korrekturspannung ist eine Gleichspannung, deren Betrag in Abhängigkeit von der Orientierung und der Größe des zu reduzierenden Quadraturbias eingestellt wird. Welche der mindestens zwei invertiert zueinander vorhandenen Korrektureinheiten beaufschlagt wird, ist abhängig vom Vorzeichen des zu kompensierenden Quadraturbias.

Alternativ oder zusätzlich kann der Betrag der Gleichspannung in Abhängigkeit von einer vorgegebenen Veränderung der Eigenfrequenz des Massensystems entlang der zweiten Achse eingestellt werden. In diesem Fall werden die beiden paarweise invertiert zueinander vorhandenen Korrektureinheiten beide mit einer Spannung gleichen Betrages beaufschlagt. Der Gleichspannungsanteil für die Quadraturbiaskompensation wird dabei der Spannung für den Frequenzabgleich vorzeichenrichtig überlagert.

Umfasst der Corioliskreisel mehr als zwei Korrektureinheiten, vorzugsweise ein Vielfaches von Zwei, so können die Korrektureinheiten mit unterschiedlichen Spannungen beaufschlagt werden, vorzugsweise so, dass sich die Spannungen in der Summe kompensieren. Beispielsweise können gleichartige Korrektureinheiten, das heißt Korrektureinheiten, die nicht invertiert zueinander ausgebildet sind, mit Spannungen gleichen Betrags, aber unterschiedlicher Polarität beaufschlagt werden.

Die Erfindung wird im Folgenden unter Bezugnahme auf die begleitenden Figuren in beispielhafter Ausführungsform näher erläutert.

Die Figur 1 zeigt eine schematische Draufsicht auf einen Corioliskreisel als zweiteiligen Einzelschwinger gemäß einer Ausführungsform der Erfindung.

Die Figur 2 zeigt eine schematische Draufsicht auf ein Detail der Figur 1 umfassend die Korrektureinheiten.

Die Figur 3 zeigt eine schematische Draufsicht auf ein Detail eines Corioliskreisels, bei dem mehrere gleichartige Korrektureinheiten ausgebildet sind.

Die Figur 4 zeigt eine schematische Draufsicht auf ein System mit zwei gekoppelten Corioliskreiseln gemäß einer weiteren Ausführungsform der Erfindung.

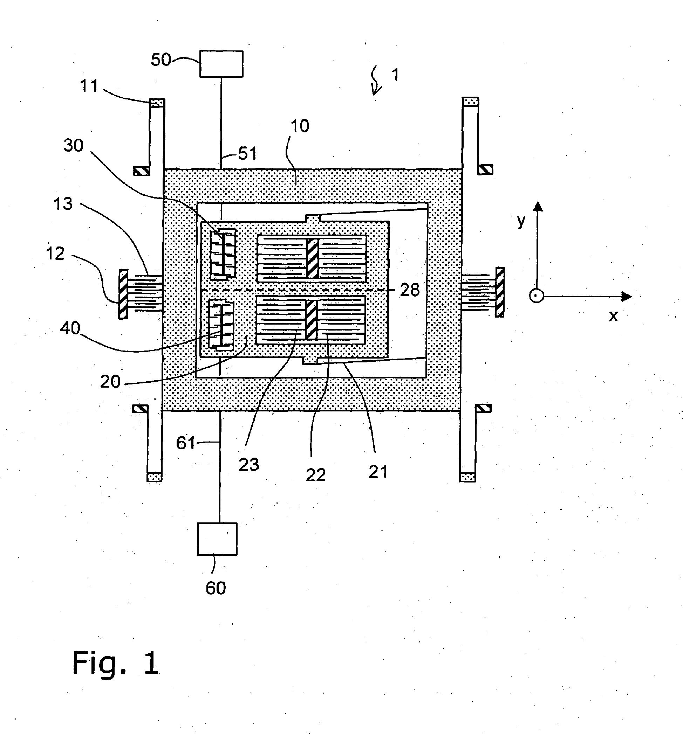

Figur 1 zeigt den prinzipiellen Aufbau eines Corioliskreisels 1 nach einer Ausführungsform, gemäß welcher der Corioliskreisel 1 als linearer Einfachschwinger ausgeführt ist. Der lineare Einfachschwinger wird vorzugsweise mittels Ätzprozessen aus einer Siliziumscheibe hergestellt und umfasst eine erste Teilmasse 10 (Antriebsrahmen), eine zweite Teilmasse 20 (Coriolismasse), erste Federelemente 11 und zweite Federelemente 21. Der Antriebsrahmen 10 ist über die ersten Federelemente 11 mit einem Substrat verbunden, das den Teilmassen 10, 20 unterliegt. Die ersten Federelemente 11 sind derart ausgebildet, dass die erste Teilmasse 10 zusammen mit der zweiten Teilmasse 20 entlang einer ersten Achse (x-Richtung) schwingen kann. Die Coriolismasse 20 ist über die zweiten Federelemente 21 mit der ersten Teilmasse 10 verbunden und so aufgehängt, dass sie gegenüber der ersten Teilmasse 10 entlang einer zur ersten Achse senkrechten zweiten Achse (y-Richtung) schwingen kann.

Die Ausgestaltung der Federelemente 21 ist dabei nicht auf eine spezielle Ausführungsform begrenzt.

Die erste und die zweite Teilmasse 10, 20 bilden das Massesystem des Corioliskreisels 1. Der Corioliskreisel umfasst ferner feststehende Anregungselektroden 12 und feststehende Detektionselektroden 23, die mit dem Substrat mechanisch verbunden, aber elektrisch isoliert sind. Unter dem Begriff "Substrat" wird eine mechanische, nicht schwingende Struktur verstanden, in der die Teilmassen 10 und 20 "eingebettet" sind, beispielsweise der nicht schwingende Teil einer Siliziumscheibe oder eines Teilstückes einer Siliziumscheibe. Der Corioliskreisel umfasst weiterhin bewegte Anregungselektroden 13, die integraler Bestandteil der ersten Teilmasse 10 sind, sowie bewegte Detektionselektroden 22, die in dieser Ausführungsform integraler Bestandteil der zweiten Teilmasse 20 sind. Die Anregungselektroden 12 und 13 erfüllen in dieser Ausführungsform zwei Funktionen, zum einen die Funktion der Anregung und zum anderen die Funktion der Bewegungdetektion der ersten Teilmasse in die erste Richtung (x-Achse des eingezeichneten Koordinatensystems), wobei die Anregungselektroden dafür elektronisch geeignet angesteuert werden. In einem anderen Ausführungsbeispiel lassen sich die Funktionen der Anregungselektroden durch doppelte Ausführung der Anregungselektroden auch separieren.

In der Regel wird an den feststehenden Anregungselektroden 12 eine Wechselspannung angelegt, während die bewegten Anregungselektroden 13, die mit dem Antriebsrahmen 10 fest verbunden sind und sich mit diesem mitbewegen, elektrisch den Gegenpol darstellen. Durch die entstehenden elektrostatischen Kräfte wird der Antriebsrahmen 10 in eine Schwingung entlang der x-Richtung angeregt. Durch die zweiten Federelemente 21 wird diese Bewegung auf die Coriolismasse 20 übertragen. Durch die vertikale Ausrichtung der ersten Federelemente 11 ist dem Antriebsrahmen 10 eine Bewegung entlang der zweiten Achse (y-Richtung), die senkrecht zu der ersten Achse verläuft, verwehrt. Eine vertikale Schwingung in y-Richtung kann jedoch aufgrund der im Wesentlichen horizontalen Ausrichtung der zweiten Federelemente 21 durch die Coriolismasse 20 ausgeführt werden. Treten infolge einer Drehung um eine senkrecht auf der Zeichenebene stehenden sensitiven Achse entsprechende Corioliskräfte auf, so wird die Coriolismasse 20 zu Schwingungen in der y-Richtung angeregt.

Über die bewegten Detektionselektroden 22, die mit der Coriolismasse 20 fest verbunden sind und sich mit dieser mitbewegen, und die feststehenden Detektionselektroden 23 wird die durch die Corioliskräfte erzeugte Bewegung in y-Richtung erfasst und ausgelesen, wobei diese Bewegung ein Maß für die anliegende Drehrate ist. Alternativ zu dem geschilderten Open-Loop-Verfahren kann die Bewegung des zweiten Schwingers 20 in y-Richtung durch einen Regelkreis und geeignete Fesselelektroden unterbunden werden, wobei in einem solchen Closed-Loop-Verfahren die dafür notwendigen Kräfte über die für die Unterbindung der y-Bewegung erforderlichen elektrischen Spannung gemessen werden und ein Maß für die anliegende Drehrate darstellen. In dem hier gewählten Ausführungsbeispiel beinhalten die Detektionselektroden 22 und 23 für das Closed-Loop-Verfahren zwei Funktionen, nämlich die der Detektion selbst und die der Fesselung, wofür diese geeignet elektronisch angesteuert werden. Jedoch können die Detektionselektroden auch in zwei Untereinheiten der gleichen Bauart unterteilt werden und jeder Untereinheit eine der beiden Funktion zugeordnet werden.

Neben der in Figur 1 dargestellten Ausführungsform sind auch andere Ausführungsformen eines Corioliskreisels möglich. Beispielsweise kann die Detektion der y-Bewegung der Coriolismasse an einem separaten Körper erfolgen, der selbst keine x-Bewegung ausführt, allerdings in y-Richtung durch geeignete Federeinheiten die y-Bewegung der Coriolismasse mit ausführt und somit die reine Funktion der Detektion übernimmt und daher auch als Detektionsrahmen bezeichnet werden kann. Im Falle des Betriebes des Kreisels im Closed-Loop-Verfahren wird in der Regel die Funktion der Detektion und der Rückstellung am separaten Körper (Detektionsrahmen) erfolgen, beide Funktionen können aber auch auf die Coriolismasse und den separaten Körper verteilt werden.

In einer weiteren Ausführungsform kann der Corioliskreisel nur eine schwingende Masse umfassen, welche im Folgenden ebenfalls unter dem Begriff "Coriolismasse" zu verstehen sein soll. Die Funktionen des Antriebsrahmens, der Coriolismasse und der Detektion, im Falle des Closed-Loop-Verfahrens auch die Funktion der Fesselung, sind dann in einer einzigen Struktur zu erfüllen.

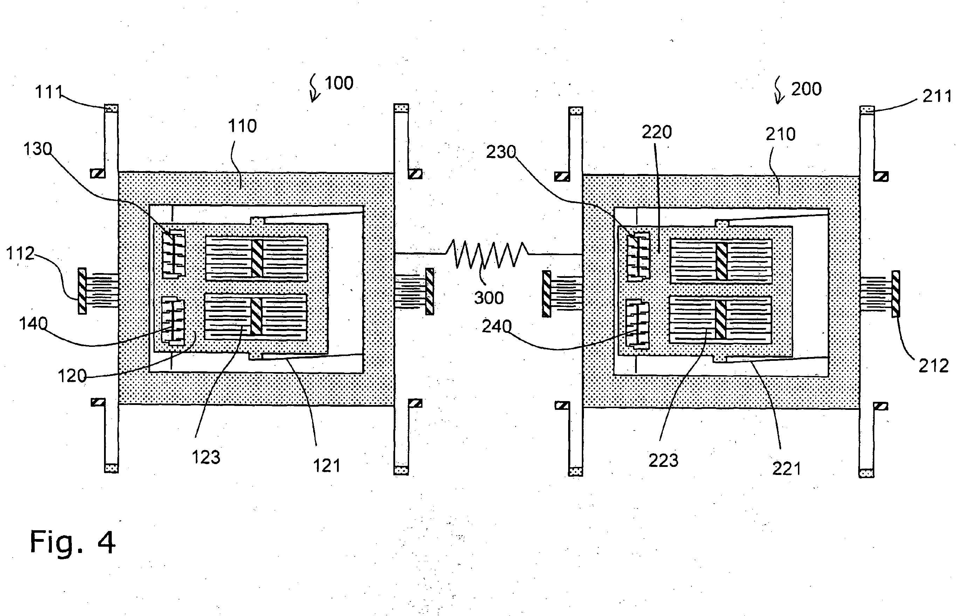

Auch können mehrere der in Figur 1 dargestellten Corioliskreisel 1, wie in Figur 4 angedeutet, zu einem einzigen Sensor zusammengefasst werden. Dabei können beispielsweise zwei Corioliskreisel entlang einer gemeinsamen Schwingungsachse gegentaktig zueinander in Schwingung versetzt werden. Damit kann die Empfindlichkeit des gekoppelten Systems gegenüber externen Störungen bzw. gegenüber Störungen, die durch das gekoppelte System selbst in das Substrat, in dem die Einfachschwinger ausgebildet sind, abgegeben werden, reduziert werden. Die Koppelung von zwei Corioliskreiseln kann über die Koppelung wie in Figure 4 dargestellt natürlich hinausgehen, sodass, je nach Ausführungsform, nicht nur die Antriebsmassen untereinander gekoppelt sind, sondern auch die Coriolismassen oder die Detektionsrahmen.

Für den Fall, dass die Anregungsbewegung nicht genau senkrecht zur Detektionsbewegung ausgerichtet ist, koppelt ein Teil der Beschleunigungskräfte aus der Anregungsbewegung, welche beispielsweise 9 Zehnerpotenzen größer sein kann gegenüber den Coriolisbeschleunigung, in die Richtung der Detektion ein, das heißt, dass die durch die Drehbewegung erzeugte Corioliskraft sehr schnell nur ein Bruchteil der Kraft ist, die die Detektionsbewegung hervorruft, was zu einem Fehler bei der Messung der Drehrate führt. Insbesondere bei sehr kleinen Drehraten führen Orientierungsfehler der beiden Teilmassen zueinander oder eine Abweichung der Bewegungsrichtung der Coriolismasse zu dem durch die Anregungselektroden und die feststehenden Detektionselektroden vorgegebenen Koordinatensystem zu einem Messfehler, der die Funktion des Corioliskreisels nachteilig beeinflusst. In Figur 1 und 4 sind als Beispiel für eine Möglichkeit dieses Fehlermechanismus die zweiten Federelemente 21 durch Fertigungstoleranzen etwas schräg gegenüber der Anregungsbewegung entlang der x-Achse orientiert. Da die Corioliskräfte direkt von der Geschwindigkeit der Anregungsbewegung abhängen, stehen diese bezüglich der Phasenlage 90° (in Quadratur) zu den Beschleunigungskräften aus der Anregungsbewegung, welche direkt mit der Amplitude der Anregungsbewegung bzw. deren zweiten zeitlichen Ableitung verbunden sind.

Zur Reduktion oder Kompensation dieses Fehlers, der auch Quadraturbias genannt wird, weist der in der Figur 1 dargestellte Corioliskreisel eine erste und eine zweite Korrektureinheit 30 bzw. 40 auf, welche immer paarweise mindesten einmal auf der Coriolismasse vorhanden sind und die jeweils feststehende, mit dem Substrat mechanisch verbundene, aber elektrisch davon isolierte Korrekturelektroden und mit der Coriolismasse elektrisch leitend und mechanisch starr verbundene bewegte Korrekturelektroden umfassen. In der in Fig. 1 dargestellten Ausführungsform sind die feststehenden Korrekturelektroden der ersten Korrektureinheit 30 mit einer ersten Steuereinheit 50 und die feststehenden Korrekturelektroden der zweiten Korrektureinheit 40 sind mit einer zweiten Steuereinheit 60 elektrisch verbunden, wobei die feststehenden Korrekturelektroden der Korrektureinheiten 30 und 40 auf einem jeweils definierten elektrischen Potential gehalten bzw. geregelt werden. Die erste Steuereinheit 50 beaufschlagt die erste Korrektureinheit 30 mit einer ersten Korrekturspannung, während die zweite Steuereinheit 60 die zweite Korrektureinheit 40 mit einer zweiten Korrekturspannung beaufschlagt. Die Korrektureinheiten 30 bzw. 40 sind mit der jeweiligen Steuereinheit 50 bzw. 60 über elektrische Verbindungsleitungen 51 bzw. 61 verbunden, wobei die Verbindungsleitungen 51 bzw. 61 elektrisch isoliert von anderen Bestandteilen des Corioliskreisels sind. Die elektrischen Verbindungsleitungen 51, 61 können beispielsweise als elektrisch leitende Gebiete im Substrat oder als Leiterbahnen aus einem elektrisch leitenden Material auf dem Substrat ausgebildet sein.

Die Korrektureinheiten 30 und 40 der in der Fig. 1 dargestellten Ausführungsform des Corioliskreisels sind spiegelbildlich mit Bezug auf eine Mittellinie 28 der Coriolismasse 20 angeordnet. Jedoch können die Korrektureinheiten 30 und 40 auch beide oberhalb oder unterhalb der Mittellinie 28 und/oder in gleichem oder verschiedenem Abstand zur Mittellinie 28 angeordnet sein. Auch die Lage der Korrektureinheiten 30 und 40 bezüglich der Detektionselektroden 22, 23 ist beliebig an das Design des Corioliskreisels anpassbar. So können beispielsweise eine oder beide Korrektureinheiten rechts von den Detektionselektroden 22, 23 oder ober- oder unterhalb davon angeordnet sein: Auch eine Anordnung zwischen zwei Teilbereichen der Detektionselektroden 22, 23, wie sie in Fig. 1 dargestellt sind, ist möglich.

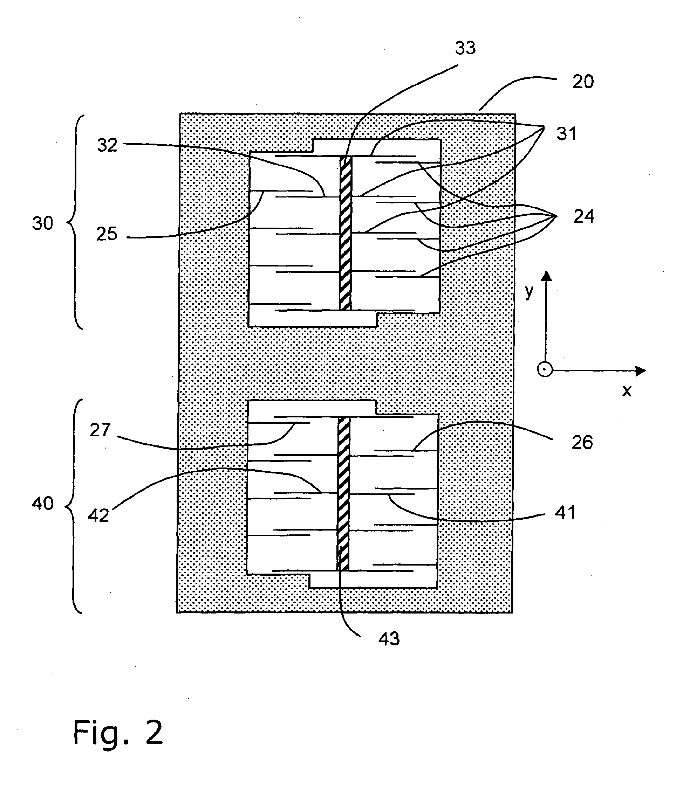

In Figur 2 sind die Korrektureinheiten 30 und 40 des linearen Einfachschwingers 1 im Detail dargestellt. Jede Korrektureinheit 30, 40 besteht aus einer Mehrzahl von ersten feststehenden Korrekturelektroden 31 bzw. 41 und von zweiten feststehenden Korrekturelektroden 32 bzw. 42, die starr mit dem Substrat verbunden sind. Darüber hinaus weist jede Korrektureinheit 30 bzw. 40 eine Mehrzahl von ersten bewegten Korrekturelektroden 24 bzw. 26 und von zweiten bewegten Korrekturelektroden 25 bzw. 27 auf, die einstückig mit der Coriolismasse 20 ausgebildet sind. Daher bewegen sich die bewegten Korrekturelektroden 24, 25, 26, 27 mit Bezug auf die feststehenden Korrekturelektroden 31, 32 bzw. 41, 42, wenn die Coriolismasse 20 in Bewegung versetzt wird.

Wird nun an den feststehenden Korrekturelektroden 31, 32 bzw. 41, 42 eine konstante Spannung angelegt, so entstehen aufgrund der Anregungsbewegung elektrostatische Kräfte, die direkt proportional zur Amplitude der Anregungsbewegung und deren zweiten zeitlichen Ableitung sind und zu einer Reduzierung des Quadraturfehlers führen. Dafür werden die Beträge der konstanten Spannungen entsprechend der Größe und der Orientierung des zu reduzierenden oder zu kompensierenden Quadratursignals gewählt. Des Weiteren kann mit der anliegenden konstanten Spannung auch die Eigenfrequenz der Coriolismasse 20 in y-Richtung beeinflusst werden, was zusätzlich für eine Trimmung bzw. gezielte Abstimmung der Eigenfrequenzen von Anregung und Auslesung genutzt werden kann.

Die erzeugten Kräfte weisen dabei in erster Ordnung nur x-abhängige oder y-abhängige Kraftkomponenten auf. Die y-abhängige Kraftkomponente führt zu einer negativen Federsteife, die der der zweiten Federelemente 21 entgegenwirkt und damit zu einer verringerten Eigenfrequenz der Coriolismasse 20 in der Detektionsrichtung (y-Richtung) führt. Diese Kraftwirkung kann über eine geeignete Wahl der Überlappungslänge im Ruhezustand der feststehenden Korrekturelektroden 31, 32 bzw. 41, 42 zu den bewegten Korrekturelektroden 24, 25 bzw. 26, 27 minimiert werden. Alternativ kann die y-abhängige Kraftkomponente auch zu einer gewünschten Frequenzabstimmung von Anregungsfrequenz und Eigenfrequenz der Coriolismasse in der Detektionsrichtung genutzt werden.

Die Kraftwirkung ist direkt proportional zur Auslenkungsbewegung der Coriolismasse in x-Richtung, wodurch sie eine feste Phasenlage von 90° zur Geschwindigkeit der Anregung aufweist. Damit erfährt die Kraftwirkung aus der Korrekturelektrode keine Phasendrehung, wodurch ein Eintrag in den Bias verhindert wird. Dies bedeutet ferner, dass bei zeitweiser Änderung der Phasenlage in der Übertragungsfunktion von Anregungs- zu Auslesebewegung, die idealer Weise 90° sein sollte, aber nicht sein muss, die Korrekturkräfte sich phasengleich mit den Kräften für die Quadratur mitdrehen und somit die Kompensationswirkung erhalten bleibt.

Ein weiterer Aspekt ist der, dass beispielsweise bei einer Anordnung ähnlich der in Figur 4 gezeigten, jedoch mit zusätzlicher Kopplung der Coriolismassen bzw. Detektionsrahmen, durch Fertigungstoleranzen eine Situation eintreten kann, bei der keine Kompensation des Quadraturfehlers durch Auslenkung der Coriolismassen in y-Richtung möglich ist. Jedoch kann der Quadraturfehler immer mit der hier beschriebenen Form der Korrekturelektroden kompensiert werden.

Die Kraftkomponenten für die Reduzierung oder Kompensation des Quadraturfehlers sind nicht von der Überlappung der feststehenden Korrekturelektroden 31, 32 bzw. 41, 42 mit den beweglichen Korrekturelektroden 24, 25 bzw. 26, 27 abhängig. Daher können die Korrektureinheiten 30 und 40 sehr klein ausgeführt werden. So ist die erforderliche minimale Überlappungslänge etwa doppelt so lang wie die Amplitude der Anregungsschwingung plus einer gewissen Länge zum Erreichen einer linear amplitudenabhängigen Kraftwirkung. So ist z.B. für Anregurigsamplituden von etwa 10 µm eine Überlappungslänge von ca. 15 µm bei einer Gesamtlänge der Korrekturelektroden von 30 bis 35 µm denkbar. Dies stellt in der Regel etwa ein Zehntel. der Abmessung dar, die für die Frequenzabstimmung zwischen Antriebsfrequenz und Detektionseigenfrequenz erforderlich ist.

Wie in Figur 2 im Detail gezeigt, umfassen die paarweise vorhandenen Korrektureinheiten 30, 40 eine Mehrzahl feststehender Korrekturelektroden 31, 32 bzw. 41, 42 und eine Mehrzahl von bewegten Korrekturelektroden 24, 25 bzw. 26, 27. Die feststehenden Korrekturelektroden 31, 32 bzw. 41, 42 sind jeweils über eine gemeinsame Ankerstruktur 33 bzw. 43 mechanisch starr mit dem Substrat verbunden, aber von diesem elektrisch isoliert.

Die Größe der Ankerstruktur kann dem Herstellungsverfahren des Corioliskreisels angepasst werden. Die Grundfläche der Ankerstruktur liegt im Bereich zwischen 2500 µm² und 0,04 mm². Prinzipiell sind möglichst kleine Ankerstrukturen erwünscht, da die Ankerstrukturen zusätzlichen Platzbedarf erzeugen und als Folge die Gesamtstruktur vergrößern. Die untere Grenze der Grundfläche wird von den technologischen Möglichkeiten sowie dem Herstellungsverfahren des Corioliskreisels bestimmt. Insbesondere kann die Ankerstruktur, beispielsweise wenn die Ankerstrukturen mit ihrer Unterlage durch Silicon-Fusion-Bonding (SFB) verbunden werden, mit einer Größe von mindestens 70x70 µm² ausgeführt werden, ohne dass dadurch der Vorteil des kleinen Platzbedarfes für die Korrekturelektroden auf Grund ihrer nur geringen erforderlichen Überlappungslänge verloren geht. Durch die kurzen erforderlichen Gesamtlängen der Korrekturelektroden können diese, je nach Herstellungsverfahren, auch sehr schmal gehalten werden, beispielsweise bis etwa 5 µm oder auch kleiner. Auch die minimale Breite der Korrekturelektroden wird von den technologischen Möglichkeiten begrenzt, wobei auch mechanische Aspekte (z.B. Verbiegung der Elektroden in der Anwendung, Snap-in) eine Rolle spielen. Damit kann trotz einer relativ großen Ankerstruktur eine insgesamt kleine Größe der Korrektureinheiten 30 und 40 erreicht werden. Eine wie oben aufgeführte Größe der Ankerstruktur ist insbesondere für ein Herstellungsverfahren, bei dem ein Silicon-Fusion-Bondverfahren zum Verbinden von vom Substrat getrennt erzeugten feststehenden Strukturen, wie der Ankerstrukturen und der feststehenden Korrekturelektroden, mit dem Substrat genutzt wird, von Vorteil. Jedoch können die feststehenden Strukturen auch durch einen Ätzprozess direkt im Substrat oder in einer auf dem Substrat aufgebrachten Schicht erzeugt werden.

Die ersten feststehenden Korrekturelektroden 31 bzw. 41 erstrecken sich von der Ankerstruktur 33 bzw. 43 aus in eine erste Richtung (positive x-Richtung), während sich die zweiten feststehenden Korrekturelektroden 32 bzw. 42 von der Ankerstruktur 33 bzw. 43 aus in eine zweite Richtung (negative x-Richtung) erstrecken. Die zweite Richtung ist der ersten Richtung entgegengesetzt. Die ersten bewegten Korrekturelektroden 24 bzw. 26 erstrecken sich von der Coriolismasse 20 aus in die zweite Richtung, während sich die zweiten bewegten Korrekturelektroden 25 bzw. 27 von der Coriolismasse 20 aus in die erste Richtung erstrecken. Damit erstrecken sich die ersten bewegten Korrekturelektroden 24 bzw. 26 in die zwischen den einzelnen ersten feststehenden Korrekturelektroden 31 bzw. 41 ausgebildeten Zwischenräume, während sich die zweiten bewegten Korrekturelektroden 25 bzw. 27 in die zwischen den einzelnen zweiten feststehenden Korrekturelektroden 32 bzw. 42 ausgebildeten Zwischenräume erstrecken. Es ergibt sich eine kammartige Struktur der Korrekturelektroden, in der jeweils eine feststehende Korrekturelektrode und eine bewegte Korrekturelektrode einander gegenüber liegen und voneinander in y-Richtung durch einen Spalt getrennt sind.

In einer Korrektureinheit ist die Anzahl der feststehenden Korrekturelektroden und der bewegten Korrekturelektroden, die sich in die erste Richtung erstrecken, vorzugsweise gleich der Anzahl der feststehenden Korrekturelektroden und der bewegten Korrekturelektroden, die sich in die zweite Richtung erstrecken.

Jeweils eine der feststehenden Korrekturelektroden 31, 32 bzw. 41, 42 ist genau einer der beweglichen Korrekturelektroden 24, 25 bzw. 26, 27 zugeordnet. Ein Teil der Coriolismasse 20 wirkt als bewegliche Korrekturelektrode, die einer feststehenden Korrekturelektrode zugeordnet ist. Beispielsweise wirkt in der ersten Korrektureinheit 30 der linke obere Teil der Coriolismassen 20 als bewegte Korrekturelektrode bezüglich der obersten feststehenden Korrekturelektrode 32, während der rechte untere Teil der Coriolismasse 20 als bewegte Korrekturelektrode bezüglich der untersten feststehenden Korrekturelektrode 31 wirkt. Der Abstand zwischen einer feststehenden Korrekturelektrode und der ihr zugeordneten bewegten Korrekturelektrode, im Folgenden "Spaltabstand" genannt, ist kleiner als der Abstand zwischen zwei gleichartigen feststehenden Korrekturelektroden oder zwei gleichartigen bewegten Korrekturelektroden und kleiner als der Abstand der jeweiligen feststehenden Korrekturelektrode zu einer anderen benachbarten bewegten Korrekturelektrode. Durch die antisymmetrische Anordnung der bewegten Korrekturelektroden 24 und 26 sowie der bewegten Korrekturelektroden 25 und 27 zu den entsprechenden feststehenden Korrekturelektroden 31 und 41 sowie 32 und 42 wird bei Anliegen einer Gleichspannung eine Kraft erzeugt, die direkt proportional zur Auslenkung der Korrekturelektroden entlang der ersten Achse (x-Achse) ist. Die zur x-Achse gespiegelt angeordneten Korrektureinheiten 30 und 40 erlauben eine vorzeichenabhängige Kompensation der Quadratur. Die unterschiedlichen Abstände einer bewegten Korrekturelektrode 24, 25, 26 bzw. 27 zu den ihr benachbarten feststehenden Korrekturelektroden 31, 32, 41 bzw. 42 sind fertigungstechnologisch bedingt und ermöglichen minimalen Flächen für die Ankerstrukturen. Darüber hinaus geben sie die Orientierung der Quadraturkompensation mit vor.

In der Korrektureinheit 30 sind jeweils die sich in die erste Richtung erstreckenden feststehenden Korrekturelektroden oberhalb der ihnen zugeordneten bewegten Korrekturelektroden angeordnet, während die sich in die zweite Richtung erstreckenden feststehenden Korrekturelektroden unterhalb der ihnen zugeordneten bewegten Korrekturelektroden angeordnet sind. Dabei bedeutet "oberhalb" von der zugeordneten bewegten Korrekturelektrodeelektrode aus in eine dritte Richtung (positive y-Richtung), während "unterhalb" von der zugeordneten bewegten Korrekturelektrode aus in eine vierte Richtung (negative y-Richtung), die der dritten Richtung entgegengesetzt ist, bedeutet. Die dritte und vierte Richtung verlaufen entlang der zweiten Achse (y-Achse) senkrecht zu der ersten und der zweiten Richtung.

In der beispielhaften Ausführung von Figur 2 ist die Anordnung der feststehenden und bewegten Korrekturelektroden zueinander in der Korrektureinheit 40 bezüglich der x-Achse spiegelsymmetrisch ausgeführt.

Die feststehenden Korrekturelektroden der zweiten Korrektureinheit 40 sind bezüglich der ihnen zugeordneten bewegten Korrekturelektroden genau entgegengesetzt zu der Anordnung in der ersten Korrektureinheit 30 angeordnet. Die aus der zweiten Korrektureinheit 40 resultierende Kraft ist bei einer beliebigen angelegten Spannung und einer Bewegung der Coriolismasse 20 entlang der ersten Achse (x-Achse) invertiert orientiert zu der resultierenden Kraft aus der ersten Korrektureinheit 30.

Erfindungsgemäß weist die Coriolismasse 20 beide Korrektureinheiten 30 und 40 in der in Figur 2 dargestellten invertierten Anordnung zueinander auf. Unerheblich ist dabei, ob die Korrektureinheit 30 oberhalb oder unterhalb von 40 positioniert ist (in y-Richtung) oder ob jede Korrektureinheit in sich in y-Richtung invertiert ist (um x-Achse gespiegelt). Die jeweilige Anordnung hat lediglich Einfluss auf die Beaufschlagung der Korrektureinheit mit einer Spannung.

Umfasst der Corioliskreisel weitere Korrektureinheiten, so können diese mit einer gleichen Konstantspannung, mit Spannungen gleichen Betrags und unterschiedlicher Polarität, mit Spannungen gleicher Polarität und unterschiedlichem Betrag oder mit vollständig unterschiedlicher Spannung und Polarität beaufschlagt werden. Es kann auch nur eine der Korrektureinheiten mit einer Gleichspannung beaufschlagt werden. Andere Korrektureinheiten können geerdet sein oder floaten.

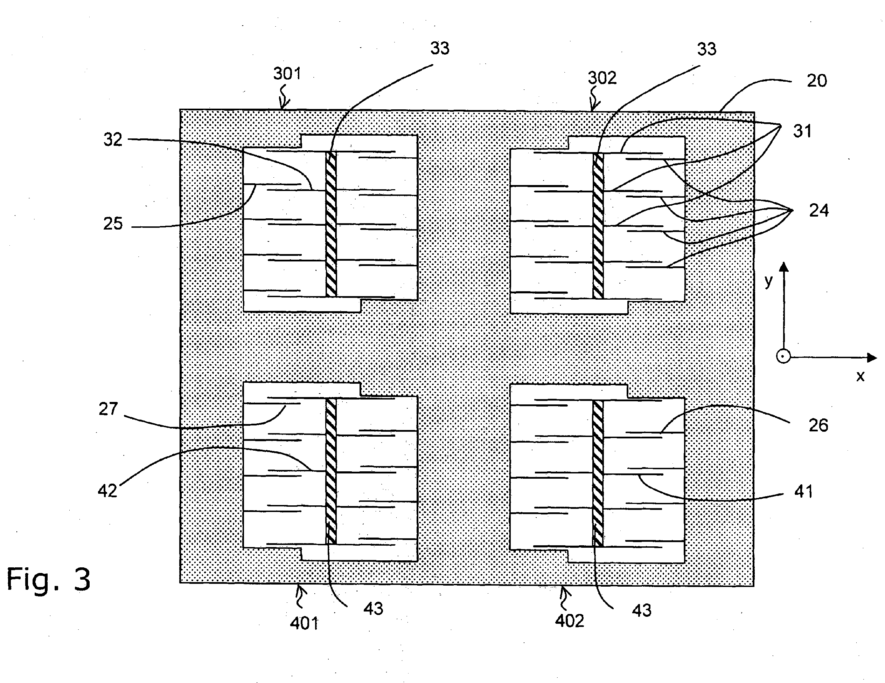

Figur 3 zeigt ein Detail einer weiteren Ausführungsform, bei der die erste Korrektureinheit und die zweite Korrektureinheit jeweils doppelt vorhanden sind. Figur 3 zeigt einen Ausschnitt aus der Coriolismasse 20 ähnlich wie Figur 2. Der Corioliskreisel weist in dieser Ausführungsform vier Korrektureinheiten 301, 302, 401 und 402 auf. Die Korrektureinheiten 301 und 302 sind gleichartig ausgebildet und entsprechen jeweils einer erste Korrektureinheit 30, wie sie in Fig. 2 dargestellt ist. Die Korrektureinheiten 401 und 402 sind ebenfalls gleichartig ausgebildet und entsprechen jeweils einer zweiten Korrektureinheit 40, wie sie in Fig. 2 dargestellt ist. Die Korrektureinheiten 301 und 302 sind invertiert zu den Korrektureinheiten 401 und 402 ausgebildet. Die Korrektureinheiten 301 und 401 bilden ein erstes Paar von invertiert zueinander ausgebildeten Korrektureinheiten, während die Korrektureinheiten 302 und 402 ein zweites Paar von invertiert zueinander ausgebildeten Korrektureinheiten bilden.

Die Korrektureinheiten 301 und 302 können mit gegensätzlich orientierten Konstantspannungen mit demselben Betrag beaufschlagt werden. Gleiches gilt für die Korrektureinheiten 401 und 402. Dies reduziert elektrische Einkoppeleffekte, wie beispielsweise Ausgleichsströme. Dieser Effekt wirkt sich sowohl im Open-Loop-Verfahren positiv aus, wirkt aber auch im Closed-Loop-Verfahren aufgrund der immer vorhandenen Restbewegung durch die Regelung.
Ein Effekt eines erfindungsgemäßen Corioliskreisels ist dessen Unabhängigkeit von der Ausgestaltung der Federelemente 21. Da die Coriolismasse 20 nicht ausgelenkt oder gedreht werden muss, können verschiedene Arten von Federelementen 21 zum Einsatz kommen. Insbesondere können die Federelemente 21 beschleunigungsunempfindlich gestaltet werden, wodurch der Corioliskreisel eine höhere Vibrationsunempfindlichkeit erhält. Das Quadratursignal wird dann nur von der Schrägstellung der Federelemente 21 bestimmt, nicht aber von deren Auslenkung bzw. deren Belastung durch die Beschleunigungskräfte aus der Anregungsschwingung.

Ein weiterer deutlicher Vorteil ist dadurch gegeben, dass pro Korrektureinheit nur eine zusammenhängende Ankerstruktur erforderlich ist, wodurch das Design und der Herstellungsprozess vereinfacht werden.

Die beschriebenen Korrektureinheiten lassen sich für Systeme aus einem oder mehreren Schwingern und für Systeme einsetzen, die bezüglich der Antriebsbewegung und / oder der Detektionsbewegung vollständig abgeschlossen, teilweise abgeschlossen oder offen sind. Eine abgeschlossene Bewegung bedeutet in diesem Sinne, dass sich die aus der Bewegung ergebenden Beschleunigungen und Momente nach außen aufheben.

Solche Korrektureinheiten lassen sich auch in gekoppelten Systemen aus mehreren Corioliskreiseln einsetzen, wobei die Anordnung der einzelnen Corioliskreisel für die Funktionsweise der Korrektureinheiten unerheblich ist. Beispielsweise kann bei einem gekoppelten System aus zwei Corioliskreiseln die Anregungsbewegung des einen Corioliskreisels 180 Grad phasenverschoben zur Anregungsbewegung des anderen Corioliskreisels sein. Bei einer Anordnung aus vier Corioliskreiseln, bei denen die Anregungsbewegung von jeweils zwei Corioliskreiseln 180 Grad phasenverschoben zueinander sind, können die einzelnen Corioliskreisel beispielsweise in Reihe angeordnet sein oder paarweise untereinander. Die Korrektureinheiten bzw. deren Untereinheiten können in Systemen mit fester Kopplung in der Detektion beliebig auf verschiedene Coriolismassen aufgeteilt werden. Damit kann die Anzahl der Leiterbahnen, die einem Corioliskreisel zugeführt werden müssen, reduziert werden.

In Figur 4 ist ein solches gekoppeltes System in einer Ausführungsform dargestellt. Das gekoppelte System umfasst beispielsweise genau zwei Corrioliskreisel 100 und 200, die jeweils entsprechend der in Fig. 1 dargestellten Ausführungsform ausgebildet und über ein mechanisches Kopplungselement 300, beispielsweise eine Feder, bezüglich der Anregungsbewegung miteinander gekoppelt sind. Dabei sind gleichartige Bauteile der jeweiligen Corioliskreisel mit entsprechenden Bezugszeichen versehen, die mit Bezug auf Figur 1 erläutert wurden. Jeder Corrioliskreisel 100 oder 200 weist in der in Figur 4 dargestellten Version je paarweise die Korrektureinheiten 130 und 140 bzw. 230 und 240 auf.

Bei einer Ausführungsform, die die beiden Coriolismassen 120 und 220 in ihrer Bewegungsmöglichkeit in y-Richtung koppelt, ist es auch möglich, dass der erste Corioliskreisel 100 nur die Korrektureinheit 130 aufweist, während der zweite Corioliskreisel 200 nur die Korrektureinheit 240 aufweist, oder nur einer der Corioliskreisel, 100, beide Korrektoreinheiten 130 und 140 aufweist und der andere Corioliskreisel, beispielsweise der Corioliskreisel 200, keine Korrektureinheit.

Wie mit Bezug auf Fig. 1 beschrieben, werden die Korrektureinheiten 130, 140, 230 bzw. 240 durch mindestens eine Steuereinheit (nicht dargestellt) im einfachsten Fall jeweils mit einer konstanten Korrekturspannung beaufschlagt. Dabei sind die feststehenden Korrekturelektroden der Korrektureinheiten 130, 140, 230 bzw. 240 über elektrische Verbindungsleitungen mit der mindestens einen Steuereinheit verbunden.

## Patentansprüche

1. Coriollskreisel (1) mit
- einem Massensystem, das zu Schwingungen parallel zu einer ersten Achse anregbar ist, wobei eine Auslenkung des Massensystems aufgrund einer Corioliskraft entlang einer zweiten Achse, die senkrecht zu der ersten Achse vorgesehen ist, nachweisbar ist, und
- mit mindestens einer ersten Korrektureinheit (30) und einer zweiten Korrektureinheit (40), die jeweils eine Mehrzahl von feststehenden Korrekturelektroden (31, 32, 41, 42) und bewegten Korrekturelektroden (24, 25, 26, 27) umfassen, wobei die feststehenden Korrekturelektroden (31, 32, 41, 42) sich in Richtung der ersten Achse erstrecken und fest über zugehörige Ankerstrukturen (33, 43) mit dem Substrat verbunden sind und die bewegten Korrekturelektroden (24, 25, 26, 27) einen Teil des Massensystems bilden, wobei
- jeder feststehenden Korrekturelektrode (31, 32, 41, 42) eine bewegte Korrekturelektrode (24, 25, 26, 27) zugeordnet ist, wobei der Abstand der jeweiligen feststehenden Korrekturelektrode (31, 32, 41, 42) zu der ihr zugeordneten bewegten Korrekturelektrode (24, 25, 26, 27) kleiner als der Abstand der jeweiligen feststehenden Korrekturelektrode (31, 32, 41, 42) zu einer anderen benachbarten bewegten Korrekturelektrode (24, 25, 26, 27) ist,
- sich erste feststehende Korrekturelektroden (31, 41) der ersten Korrektureinheit (30) oder der zweiten Korrektureinheit (40) von der Jeweils zugehörigen Ankerstruktur (33, 43) aus in eine erste Richtung entlang der ersten Achse und zweite feststehende Korrekturelektroden (32, 42) der ersten Korrektureinheit (30) oder der zweiten Korrektureinheit (40) von der jeweils zugehörigen Ankerstruktur (33, 43) aus in eine zweite Richtung entlang der ersten Achse erstrecken, wobei die zweite Richtung entgegengesetzt zur ersten Richtung ist,
- sich erste bewegte Korrekturelektroden (24, 26) von dem Massensystem aus in die zweite Richtung entlang der ersten Achse und zweite bewegte Korrekturelektroden (25, 27) von dem Massensystem aus in die erste Richtung entlang der ersten Achse erstrecken,
- in der ersten Korrektureinheit (30) jede erste feststehende Korrekturelektrode (31) von der ihr zugeordneten ersten bewegten Korrekturelektrode (24) aus gesehen in einer dritten Richtung entlang der zweiten Achse angeordnet ist, während jede zweite feststehende Korrekturelektrode (32) von der ihr zugeordneten zweiten bewegten Korrekturelektrode (25) aus gesehen in einer vierten Richtung entlang der zweiten Achse angeordnet ist, wobei die vierte Richtung der dritten Richtung entgegengesetzt ist, und
- In der zweiten Korrektureinheit (40) jede erste feststehende Korrekturelektrode (41) von der ihr zugeordneten ersten bewegten Korrekturelektrode (26) aus gesehen in der vierten Richtung entlang der zweiten Achse angeordnet ist, während jede zweite feststehende Korrekturelektrode (42) von der ihr zugeordneten zweiten bewegten Korrekturelektrode (27) aus gesehen in der dritten Richtung entlang der zweiten Achse angeordnet ist,
**dadurch gekennzeichnet, dass**
sich die ersten und zweiten feststehenden Korrekturelektroden ein und derselben Korrektureinheit (30, 40) jeweils von einer gemeinsamen Ankerstruktur (33, 43) aus erstrecken.

2. Corioliskreisel nach Anspruch 1, **dadurch gekennzeichnet, dass** das Massensystem des Corioliskreisels (1) aus einer ersten Teilmasse (10) und einer zweiten Teilmasse (20) besteht, wobei eine Auslenkung der zweiten Teilmasse (20) durch die Corioliskraft nachweisbar ist, und wobei die bewegten Korrekturelektroden (24, 25, 26, 27) einstückig mit der zweiten Teilmasse (20) ausgeführt sind.

3. Cortoliskreisel nach einem der vorhergehenden Ansprüche, weiterhin umfassend
einen Regelkreis, der geeignet ist, die Auslenkung des Massensystems durch die Corioliskraft über das Erzeugen von Rückstellkräften zur Kompensation den Auslenkung nachzuweisen.

4. Corioliskreisel nach einem der vorhergehenden Ansprüche, **dadurch gekennzeichnet, dass**
- die Mehrzahl der feststehenden Korrekturelektroden (31, 32, 41, 42) eine jeweils gleiche Anzahl von ersten feststehenden Korrekturelektroden (31, 41) und von zweiten feststehenden Korrekturelektroden (32, 42) aufweist, und
- die Mehrzahl der bewegten Korrekturelektroden (24, 25, 26, 27) eine jeweils gleiche Anzahl von ersten bewegten Korrekturelektroden (24, 26) und von zweiten bewegten Korrekturelektroden (25, 27) aufweist.

5. Corioliskreisel nach Anspruch 1, **dadurch gekennzeichnet, dass** der Corioliskreisel (1) mehrere gleichartig ausgebildete erste Korrektureinheiten (30) und/oder mehrere gleichartig ausgebildete zweite Korrektureinheiten (40) umfasst.

6. Coriollskreisel nach Anspruch 5, **dadurch gekennzeichnet, dass** der Corioliskreisel (1) eine gleiche Anzahl von ersten und zweiten Korrektureinheiten (30, 40) umfasst.

7. Corioliskreisel nach einem der vorhergehenden Ansprüche, **dadurch gekennzeichnet, dass** die feststehenden Korrekturelektroden (31, 32, 41, 42) und/oder die bewegten Korrekturelektroden (24, 25. 26, 27) jeweils eine Breite von maximal 10 µm aufweisen.

8. Corioliskreisel nach einem der vorhergehenden Ansprüche, weiterhin umfassend mindestens eine Steuereinheit (50, 60), die mit den Korrektureinheiten (30, 40) elektrisch verbunden ist und geeignet ist, diese mit zumindest zeitweise konstanten Korrekturspannungen zu beaufschlagen.

9. System mit
- mindestens zwei Corioliskreiseln (100, 200), die jeweils ein Massensystem umfassen, das zu Schwingungen parallel zu einer ersten Achse anregbar ist, wobei eine Auslenkung des Massensystems aufgrund einer Corioliskraft entlang einer zweiten Achse, die senkrecht zu der ersten Achse vorgesehen ist, nachweisbar ist, und die miteinander gekoppelt sind, und
- mindestens einer ersten Korrektureinheit (130, 230) und mindestens einer zweiten Korrektureinheit (140, 240), die jeweils eine Mehrzahl von feststehenden Korrekturelektroden (31, 32, 41, 42) und bewegten Korrekturelektroden (24, 25, 26, 27) umfassen, wobei die feststehenden Korrekturelektroden (31, 32, 41, 42) sich in Richtung der ersten Achse erstrecken und fest über zugehörige Ankerstrukturen (33, 43) mit dem Substrat verbunden sind und die bewegten Korrekturelektroden (24, 25, 26, 27) einen Teil des Massensystems von mindestens einem der mindestens zwei Corioliskreisel (100, 200) bilden, wobei
- jeder feststehenden Korrekturelektrode (31, 32, 41, 42) eine bewegte Korrekturelektrode (24, 25, 26, 27) zugeordnet ist, wobei der Abstand der jeweiligen feststehenden Korrekturelektrode (31, 32, 41, 42) zu der ihr zugeordneten bewegten Korrekturelektrode (24, 25, 26, 27) kleiner als der Abstand der jeweiligen feststehenden Korrekturelektrode (31, 32, 41, 42) zu einer anderen benachbarten bewegten Korrekturelektrode (24, 25, 26, 27) ist,
- sich erste feststehende Korrekturelektroden (31, 41) der ersten Korrektureinheit (30) oder der zweiten Korrektureinheit (40) von der jeweils zugehörigen Ankerstruktur (33, 43) aus in eine erste Richtung entlang der ersten Achse und zweite feststehende Korrekturelektroden (32, 42) der ersten Korrektureinheit (30) oder der zweiten Korrektureinheit (40) von der jeweils zugehörigen Ankerstruktur (33, 43) aus in eine zweite Richtung entlang der ersten Achse erstrecken, wobei die zweite Richtung entgegengesetzt zur ersten Richtung ist,
- sich erste bewegte Korrekturelektroden (24, 26) von dem Massensystem aus in die zweite Richtung entlang der ersten Achse und zweite bewegte Korrekturelektroden (25, 27) von dem Massensystem aus in die erste Richtung entlang der ersten Achse erstrecken,
- in der ersten Korrekturelnheit (130, 230) jede erste feststehende Korrekturelektrode (31) von der ihr zugeordneten ersten bewegten Korrekturelektrode (24) aus gesehen in einer dritten Richtung entlang der zweiten Achse angeordnet ist, während jede zweite feststehende Korrekturelektrode (32) von der ihr zugeordneten zweiten bewegten Korrekturelektrode (25) aus gesehen in einer vierten Richtung entlang der zweiten Achse angeordnet ist, wobei die vierte Richtung der dritten Richtung entgegengesetzt ist, und
- in der zweiten Korrektureinheit (140, 240) jede erste feststehende Korrekturelektrode (41) von der ihr zugeordneten ersten bewegten Korrekturelektrode (26) aus gesehen in der vierten Richtung entlang der zweiten Achse angeordnet ist, während jede zweite feststehende Korrekturelektrode (42) von der ihr zugeordneten zweiten bewegten Korrekturelektrode (27) aus gesehen in der dritten Richtung entlang der zweiten Achse angeordnet ist,
**dadurch gekennzeichnet, dass**
sich die ersten und zweiten feststehenden Korrekturelektroden ein und derselben Korrektureinheit (130, 140, 230, 240) jeweils von einer gemeinsamen Ankerstruktur (33, 43) aus erstrecken.

10. System nach Anspruch 9, **dadurch gekennzeichnet, dass**
- die Mehrzahl der feststehenden Korrekturelektroden (31, 32, 41, 42) eine jeweils gleiche Anzahl von ersten feststehenden Korrekturelektroden (31, 41) und von zweiten feststehenden Korrekturelektroden (32, 42) aufweist, und
- die Mehrzahl der bewegten Korrekturelektroden (24, 25, 26, 27) eine jeweils gleiche Anzahl von ersten bewegten Korrekturelektroden (24, 26) und von zweiten bewegten Korrekturelektroden (25, 27) aufweist.

11. System nach einem der Ansprüche 9 oder 10, **dadurch gekennzeichnet, dass**
- die mindestens zwei Corioliskreisel (100, 200) miteinander bezüglich einer Anregungsbewegung, die das Massensystem zu Schwingungen parallel zu der ersten Achse anregt, gekoppelt sind, und
- jeder Corioliskreisel (100, 200) mindestens eine erste Korrektureinheit (130, 230) und mindestens eine zweite Korrektureinheit (140, 240) umfasst.

12. System nach Anspruch 11, **dadurch gekennzeichnet, dass**
- mindestens eine erste Korrektureinheit (130) eines ersten Corioliskreisels (100) gleichartig bezüglich mindestens einer ersten Korrektureinheit (230) eines zweiten Corioliskreisels (200) ausgestaltet ist, und
- mindestens eine zweite Korrektureinheit (140) des ersten Corioliskreisels (100) gleichartig bezüglich mindestens einer zweiten Korrektureinheit (240) des zweiten Corioliskreisels (200) ausgestaltet ist.

13. System nach einem der Ansprüche 9 oder 10, **dadurch gekennzeichnet, dass**
- die mindestens zwei Corioliskreisel (100, 200) miteinander bezüglich einer Detektion der Auslenkung des Massensystems aufgrund der Corioliskraft, die entlang der zweiten Achse wirkt, gekoppelt sind, und
- mindestens einer der Corioliskreisel (100, 200) mindestens eine erste Korrektureinheit (130, 230) und mindestens einer der Corioliskreisel (100, 200) mindestens eine zweite Korrektureinheit (140, 240) umfasst.

14. System nach einem der Ansprüche 9 bis 13, weiterhin umfassend mindestens eine Steuereinheit, die mit den Korrektureinheiten (130, 140, 230, 240) elektrisch verbunden ist und geeignet ist, diese mit zumindest zeitweise konstanten Korrekturspannungen zu beaufschlagen.

15. Verfahren zur Reduktion des Quadraturbias eines Corioliskreisels (1) nach Anspruch 1, wobei das Verfahren einen Schritt zum Beaufschlagen der Korrektureinheiten (30, 40) mit zumindest zeitweise konstanten Korrekturspannungen umfasst, wobei die Korrekturspannungen unter Berücksichtigung des zu reduzierenden Quadraturbias gewählt werden,
**dadurch gekennzeichnet, dass**
der Betrag der Korrekturspannungen in Abhängigkeit von einer definierten Veränderung der Eigenfrequenz des Massensystems entlang der zweiten Achse eingestellt wird.

16. Verfahren zur Reduktion des Quadraturbias eines Corioliskreisels (1) nach Anspruch 5, wobei das Verfahren einen Schritt zum Beaufschlagen der Korrektureinheiten (30, 40) mit zumindest zeitweise konstanten Korrekturspannungen umfasst, wobei die Korrekturspannungen unter Berücksichtigung des zu reduzierenden Quadraturbias gewählt werden,
**dadurch gekennzeichnet, dass**
sich die Korrekturspannungen, mit denen gleichartig ausgebildete Korrektureinheiten (30, 40) beaufschlagt werden, in der Summe kompensieren.

## Claims

1. Coriolis gyroscope (1) comprising
- a mass system that can be excited to perform oscillations parallel to a first axis, whereby a deflection of said mass system on account of a Coriolis force along a second axis that is provided perpendicular to the first axis is detectable; and
- at least one first correction unit (30) and one second correction unit (40), which each comprise a plurality of stationary correction electrodes (31, 32, 41, 42) and moving correction electrodes (24, 25, 26, 27), whereby the stationary correction electrodes (31, 32, 41, 42) extend in the direction of the first axis and are firmly connected to the substrate by corresponding anchor structures (33, 43) and the moving correction electrodes (24, 25, 26, 27) are a part of the mass system, whereby
- each stationary correction electrode (31, 32, 41, 42) has a moving correction electrode (24, 25, 26, 27) assigned to it, whereby the distance between the respective stationary correction electrode (31, 32, 41, 42) and the moving correction electrode (24, 25, 26, 27) assigned to it is smaller than the distance between the respective stationary correction electrode (31, 32, 41, 42) and another adjacent moving correction electrode (24, 25, 26, 27);
- first stationary correction electrodes (31, 41) of the first correction unit (30) or of the second correction unit (40) extend from the corresponding anchor structure (33, 43) in a first direction along the first axis, and second stationary correction electrodes (32, 42) of the first correction unit (30) or of the second correction unit (40) extend from the corresponding anchor structure (33, 43) in a second direction along the first axis, whereby the second direction is opposite to the first direction;
- first moving correction electrodes (24, 26) extend from the mass system in the second direction along the first axis, and second moving correction electrodes (25, 27) extend from the mass system in the first direction along the first axis;
- each first stationary correction electrode (31) in the first correction unit (30) is arranged in a third direction along the second axis, as seen from the first moving correction electrode (24) assigned to it, whereas each second stationary correction electrode (32) is arranged in a fourth direction along the second axis, as seen from the second moving correction electrode (25) assigned to it, whereby the fourth direction is opposite to the third direction; and
- each first stationary correction electrode (41) in the second correction unit (40) is arranged in the fourth direction along the second axis, as seen from the first moving correction electrode (26) assigned to it, whereas each second stationary correction electrode (42) is arranged in the third direction along the second axis, as seen from the second moving correction electrode (27) assigned to it,
**characterized in that**
the first and second stationary correction electrodes of the same correction unit (30, 40) each extend from a common anchor structure (33, 43).

2. Coriolis gyroscope according to claim 1, **characterized in that**
the mass system of the Coriolis gyroscope (1) consists of a first part-mass (10) and a second part-mass (20), whereby a deflection of the second part-mass (20) on account of the Coriolis force can be detected, and whereby the moving correction electrodes (24, 25, 26, 27) are provided as the same part together with the second part-mass (20).

3. Coriolis gyroscope according to any one of the preceding claims, further comprising
a control circuit that is well-suited for detecting the deflection of the mass system on account of the Coriolis force by means of the generation of restoring forces for compensation of the deflection.

4. Coriolis gyroscope according to any one of the preceding claims, **characterized in that**
- the plurality of stationary correction electrodes (31, 32, 41, 42) has, in each case, an equal number of first stationary correction electrodes (31, 41) and of second stationary correction electrodes (32, 42), and
- the plurality of moving correction electrodes (24, 25, 26, 27) has, in each case, an equal number of first moving correction electrodes (24, 26) and of second moving correction electrodes (25, 27).

5. Coriolis gyroscope according to claim 1, **characterized in that**
the Coriolis gyroscope (1) comprises multiple first correction units (30) of the same design and/or multiple second correction units (40) of the same design.

6. Coriolis gyroscope according to claim 5, **characterized in that**
the Coriolis gyroscope (1) comprises an equal number of first and second correction units (30, 40).

7. Coriolis gyroscope according to any one of the preceding claims, **characterized in that**
the stationary correction electrodes (31, 32, 41, 42) and/or the moving correction electrodes (24, 25, 26, 27) each have a width of maximally 10 µm.

8. Coriolis gyroscope according to any one of the preceding claims, further comprising
at least one control unit (50, 60) that is electrically connected to the correction units (30, 40) and is well-suited for applying to them at least temporarily constant corrective voltages.

9. System comprising
- at least two Coriolis gyroscopes (100, 200), which each comprise a mass system that can be excited to perform oscillations parallel to a first axis, whereby a deflection of the mass system on account of a Coriolis force along a second axis that is provided perpendicular to the first axis is detectable, and which are coupled to each other, and
- at least one first correction unit (130, 230) and at least one second correction unit (140, 240), which each comprise a plurality of stationary correction electrodes (31, 32, 41, 42) and moving correction electrodes (24, 25, 26, 27), whereby the stationary correction electrodes (31, 32, 41, 42) extend in the direction of the first axis and are firmly connected to the substrate by corresponding anchor structures (33, 43), and the moving correction electrodes (24, 25, 26, 27) are a part of the mass system of at least one of the at least two Coriolis gyroscopes (100, 200), whereby
- each stationary correction electrode (31, 32, 41, 42) has a moving correction electrode (24, 25, 26, 27) assigned to it, whereby the distance between the respective stationary correction electrode (31, 32, 41, 42) and the moving correction electrode (24, 25, 26, 27) assigned to it is smaller than the distance between the respective stationary correction electrode (31, 32, 41, 42) and another adjacent moving correction electrode (24, 25, 26, 27);
- first stationary correction electrodes (31, 41) of the first correction unit (30) or of the second correction unit (40) extend from the corresponding anchor structure (33, 43) in a first direction along the first axis, and second stationary correction electrodes (32, 42) of the first correction unit (30) or of the second correction unit (40) extend from the corresponding anchor structure (33, 43) in a second direction along the first axis, whereby the second direction is opposite to the first direction;
- first moving correction electrodes (24, 26) extend from the mass system in the second direction along the first axis, and second moving correction electrodes (25, 27) extend from the mass system in the first direction along the first axis;
- each first stationary correction electrode (31) in the first correction unit (130, 230) is arranged in a third direction along the second axis, as seen from the first moving correction electrode (24) assigned to it, whereas each second stationary correction electrode (32) is arranged in a fourth direction along the second axis, as seen from the second moving correction electrode (25) assigned to it, whereby the fourth direction is opposite to the third direction; and
- each first stationary correction electrode (41) in the second correction unit (140, 240) is arranged in the fourth direction along the second axis, as seen from the first moving correction electrode (26) assigned to it, whereas each second stationary correction electrode (42) is arranged in the third direction along the second axis, as seen from the second moving correction electrode (27) assigned to it,
**characterized in that**
the first and second stationary correction electrodes of the same correction unit (130, 140, 230, 240) each extend from a common anchor structure (33, 43).

10. System according to claim 9, **characterized in that**
- the plurality of stationary correction electrodes (31, 32, 41, 42) has, in each case, an equal number of first stationary correction electrodes (31, 41) and of second stationary correction electrodes (32, 42); and
- the plurality of moving correction electrodes (24, 25, 26, 27) has, in each case, an equal number of first moving correction electrodes (24, 26) and of second moving correction electrodes (25, 27).

11. System according to any one of the claims 9 or 10, **characterized in that**
- the at least two Coriolis gyroscopes (100, 200) are coupled to each other with respect to an excitation motion that excites the mass system to perform oscillations parallel to the first axis, and
- each Coriolis gyroscope (100, 200) comprises at least one first correction unit (130, 230) and at least one second correction unit (140, 240).

12. System according to claim 11, **characterized in that**
- at least one first correction unit (130) of a first Coriolis gyroscope (100) is designed to be identical to at least one first correction unit (230) of a second Coriolis gyroscope (200); and
- at least one second correction unit (140) of the first Coriolis gyroscope (100) is designed to be identical to at least one second correction unit (240) of the second Coriolis gyroscope (200).

13. System according to any one of the claims 9 or 10, **characterized in that**
- the at least two Coriolis gyroscopes (100, 200) are coupled to each other with respect to a detection of the deflection of the mass system on account of the Coriolis force that acts along the second axis; and
- at least one of the Coriolis gyroscopes (100, 200) comprises at least one first correction unit (130, 230) and at least one of the Coriolis gyroscopes (100, 200) comprises at least one second correction unit (140, 240).

14. System according to any one of the claims 9 to 13, further comprising
at least one control unit that is electrically connected to the correction units (130, 140, 230, 240) and is well-suited for applying to them at least temporarily constant corrective voltages.

15. Method for reducing the quadrature bias of a Coriolis gyroscope (1) according to claim 1, whereby the method comprises
a step of applying at least temporarily constant corrective voltages to the correction units (30, 40), whereby the corrective voltages are selected taking into account the quadrature bias to be reduced,
**characterized in that**
the magnitude of the corrective voltages is adjusted as a function of a defined change in the resonant frequency of the mass system along the second axis.

16. Method for reducing the quadrature bias of a Coriolis gyroscope (1) according to claim 5, whereby the method comprises
a step of applying at least temporarily constant corrective voltages to the correction units (30, 40), whereby the corrective voltages are selected taking into account the quadrature bias to be reduced,
**characterized in that**
the sum of the corrective voltages that are being applied to correction units (30, 40) of the same design balances out.

## Revendications

1. Gyroscope à effet Coriolis (1) avec
- un système de masses qui est apte à être mis en vibration parallèlement à un premier axe, étant précisé qu'une déviation du système de masses est détectable en raison d'une force de Coriolis le long d'un deuxième axe, perpendiculaire au premier axe, et
- avec au moins une première unité de correction (30) et une deuxième unité de correction (40) qui comprennent chacune une multiplicité d'électrodes de correction fixes (31, 32, 41, 42) et d'électrodes de correction mobiles (24, 25, 26, 27), étant précisé que les électrodes de correction fixes (31, 32, 41, 42) s'étendent dans le sens du premier axe et sont reliées solidement au substrat par l'intermédiaire de structures d'ancrage associées (33, 43), et que les électrodes de correction mobiles (24, 25, 26, 27) forment une partie du système de masses, étant précisé
- qu'une électrode de correction mobile (24, 25, 26, 27) est associée à chaque électrode de correction fixe (31, 32, 41, 42), étant précisé que la distance entre l'électrode de correction fixe (31, 32, 41, 42) et l'électrode de correction mobile (24, 25, 26, 27) qui lui est respectivement associée est inférieure à la distance entre l'électrode de correction fixe (31, 32, 41, 42) et une autre électrode de correction mobile (24, 25, 26, 27) voisine,
- que des premières électrodes de correction fixes (31, 41) de la première unité de correction (30) ou de la deuxième unité de correction (40) s'étendent à partir de la structure d'ancrage associée (33, 43) dans un premier sens le long du premier axe, et que des deuxièmes électrodes de correction fixes (32, 42) de la première unité de correction (30) ou de la deuxième unité de correction (40) s'étendent à partir de la structure d'ancrage associée (33, 43) dans un deuxième sens le long du premier axe, étant précisé que le deuxième sens est opposé au premier,
- que des premières électrodes de correction mobiles (24, 26) s'étendent à partir du système de masses dans le deuxième sens le long du premier axe, et que des deuxièmes électrodes de correction mobiles (25, 27) s'étendent à partir du système de masses dans le premier sens le long du premier axe,
- que dans la première unité de correction (30), chaque première électrode de correction fixe (31) s'étend, à partir de l'électrode de correction mobile (24) qui lui est associée, dans un troisième sens le long du deuxième axe, tandis que chaque deuxième électrode de correction (32) s'étend, à partir de la deuxième électrode mobile (25) qui lui est associée, dans un quatrième sens le long du deuxième axe, le quatrième sens étant opposé au troisième, et
- que dans la deuxième unité de correction (40), chaque électrode de correction fixe (41) est disposée, à partir de la première électrode de correction mobile (26) qui lui est associée, dans le quatrième sens le long du deuxième axe, tandis que chaque deuxième électrode de correction fixe (42) est disposée, à partir de la deuxième électrode de correction mobile (27) qui lui est associée, dans le troisième sens le long du deuxième axe,
**caractérisé en ce que** les premières et les deuxièmes électrodes de correction fixes d'une même unité de correction (30, 40) s'étendent respectivement à partir d'une structure d'ancrage (33, 43) commune.

2. Gyroscope à effet Coriolis selon la revendication 1, **caractérisé en ce que** le système de masses du gyroscope à effet Coriolis (1) se compose d'une première masse partielle (10) et d'une deuxième masse partielle (20), étant précisé qu'une déviation de la deuxième masse partielle (20) est détectable grâce à la force de Coriolis, et que les électrodes de correction mobiles (24, 25, 26, 27) sont réalisées d'une seule pièce avec la deuxième masse partielle (20).

3. Gyroscope à effet Coriolis selon l'une des revendications précédentes, comprenant également un circuit régulateur qui est apte à détecter la déviation du système de masses grâce à la force de Coriolis, par l'intermédiaire de la production de forces de rappel pour compenser ladite déviation.

4. Gyroscope à effet Coriolis selon l'une des revendications précédentes, **caractérisé en ce que**
- l'ensemble desdites électrodes de correction fixes (31, 32, 41, 42) comporte un même nombre de premières électrodes de correction fixes (31, 41) et de deuxièmes électrodes de correction fixes (32, 42), et
- l'ensemble desdites électrodes de correction mobiles (24, 25, 26, 27) comporte un même nombre de premières électrodes de correction mobiles (24, 26) et de deuxièmes électrodes de correction mobiles (25, 27).

5. Gyroscope à effet Coriolis selon la revendication 1, **caractérisé en ce que** le gyroscope à effet Coriolis (1) comprend plusieurs premières unités de correction (30) identiques et/ou plusieurs deuxièmes unités de correction (40) identiques.

6. Gyroscope à effet Coriolis selon la revendication 5, **caractérisé en ce que** le gyroscope à effet Coriolis (1) comprend un même nombre de premières et de deuxièmes unités de correction (30, 40).

7. Gyroscope à effet Coriolis selon l'une des revendications précédentes, **caractérisé en ce que** les électrodes de correction fixes (31, 32, 41, 42) et/ou les électrodes de correction mobiles (24, 25, 26, 27) présentent chacune une largeur de 10 µm au maximum.

8. Gyroscope à effet Coriolis selon l'une des revendications précédentes, comprenant également au moins une unité de commande (50, 60) qui est reliée électriquement aux unités de correction (30, 40) et qui est apte à soumettre celles-ci à des tensions de correction au moins temporairement constantes.

9. Système avec
- au moins deux gyroscopes à effet Coriolis (100, 200) qui comprennent chacun un système de masses apte à être mis en vibration parallèlement à un premier axe, étant précisé qu'une déviation du système de masses est détectable grâce à une force de Coriolis le long d'un deuxième axe, perpendiculaire au premier axe, et qui sont couplés l'un à l'autre,
- au moins une première unité de correction (130, 230) et au moins une deuxième unité de correction (140, 240) qui comprennent chacune une multiplicité d'électrodes de correction fixes (31, 32, 41, 42) et d'électrodes de correction mobiles (24, 25, 26, 27), étant précisé que les électrodes de correction fixes (31, 32, 41, 42) s'étendent dans le sens du premier axe et sont reliées solidement au substrat par l'intermédiaire de structures d'ancrage associées (33, 43), et que les électrodes de correction mobiles (24, 25, 26, 27) forment une partie du système de masses, étant précisé
- qu'une électrode de correction mobile (24, 25, 26, 27) est associée à chaque électrode de correction fixe (31, 32, 41, 42), étant précisé que la distance entre l'électrode de correction fixe (31, 32, 41, 42) et l'électrode de correction mobile (24, 25, 26, 27) qui lui est respectivement associée est inférieure à la distance entre l'électrode de correction fixe (31, 32, 41, 42) et une autre électrode de correction mobile (24, 25, 26, 27) voisine,
- que des premières électrodes de correction fixes (31, 41) de la première unité de correction (30) ou de la deuxième unité de correction (40) s'étendent à partir de la structure d'ancrage associée (33, 43) dans un premier sens le long du premier axe, et que des deuxièmes électrodes de correction fixes (32, 42) de la première unité de correction (30) ou de la deuxième unité de correction (40) s'étendent à partir de la structure d'ancrage associée (33, 43) dans un deuxième sens le long du premier axe, étant précisé que le deuxième sens est opposé au premier,
- que des premières électrodes de correction mobiles (24, 26) s'étendent à partir du système de masses dans le deuxième sens le long du premier axe, et que des deuxièmes électrodes de correction mobiles (25, 27) s'étendent à partir du système de masses dans le premier sens le long du premier axe,
- que dans la première unité de correction (130, 230), chaque première électrode de correction fixe (31) s'étend, à partir de l'électrode de correction mobile (24) qui lui est associée, dans un troisième sens le long du deuxième axe, tandis que chaque deuxième électrode de correction (32) s'étend, à partir de la deuxième électrode mobile (25) qui lui est associée, dans un quatrième sens le long du deuxième axe, le quatrième sens étant opposé au troisième, et
- que dans la deuxième unité de correction (140, 240), chaque électrode de correction fixe (41) est disposée, à partir de la première électrode de correction mobile (26) qui lui est associée, dans le quatrième sens le long du deuxième axe, tandis que chaque deuxième électrode de correction fixe (42) est disposée, à partir de la deuxième électrode de correction mobile (27) qui lui est associée, dans le troisième sens le long du deuxième axe,
**caractérisé en ce que** les premières et les deuxièmes électrodes de correction fixes d'une même unité de correction (130, 140, 230, 240) s'étendent respectivement à partir d'une structure d'ancrage (33, 43) commune.

10. Système selon la revendication 9, **caractérisé en ce que**
- l'ensemble desdites électrodes de correction fixes (31, 32, 41, 42) comporte un même nombre de premières électrodes de correction fixes (31, 41) et de deuxièmes électrodes de correction fixes (32, 42), et
- l'ensemble desdites électrodes de correction mobiles (24, 25, 26, 27) comporte un même nombre de premières électrodes de correction mobiles (24, 26) et de deuxièmes électrodes de correction mobiles (25, 27).

11. Système selon l'une des revendications 9 ou 10, **caractérisé en ce que**
- les deux gyroscopes de Coriolis (100, 200), ou plus, sont couplés pour un mouvement d'excitation qui met en vibration le système de masses parallèlement au premier axe, et
- chaque gyroscope à effet Coriolis (100, 200) comprend au moins une première unité de correction (130, 230) et au moins une deuxième unité de correction (140, 240).

12. Système selon la revendication 11, **caractérisé en ce que**
- au moins une première unité de correction (130) d'un premier gyroscope à effet Coriolis (100) est identique à au moins une première unité de correction (230) d'un deuxième gyroscope à effet Coriolis (200), et
- au moins une deuxième unité de correction (140) du premier gyroscope à effet Coriolis (100) est identique à au moins une deuxième unité de correction (240) du deuxième gyroscope à effet Coriolis (200).

13. Système selon l'une des revendications 9 ou 10, **caractérisé en ce que**
- les deux gyroscopes à effet Coriolis (100, 200), ou plus, sont couplés pour une détection de la déviation du système de masses en raison de la force de Coriolis qui agit le long du deuxième axe, et
- l'un au moins des gyroscopes à effet Coriolis (100, 200) comprend au moins une première unité de correction (130, 230), et l'un au moins des gyroscopes à effet Coriolis (100, 200) comprend au moins une deuxième unité de correction (140, 240).

14. Système selon l'une des revendications 9 à 13, comprenant également au moins une unité de commande qui est reliée électriquement aux unités de correction (130, 140, 230, 240) et qui est apte à soumettre celles-ci à des tensions de correction au moins temporairement constantes.

15. Procédé de réduction du biais en quadrature d'un gyroscope à effet Coriolis (1) selon la revendication 1, étant précisé que le procédé comprend une étape pour soumettre les unités de correction (30, 40) à des tensions de correction au moins temporairement constantes, les tensions de correction étant choisies compte tenu du biais en quadrature à réduire,
**caractérisé en ce que** la valeur des tensions de correction est réglée en fonction d'une modification définie de la fréquence propre du système de masses le long du deuxième axe.

16. Procédé de réduction du biais en quadrature d'un gyroscope à effet Coriolis (1) selon la revendication 5, étant précisé que le procédé comprend une étape pour soumettre les unités de correction (30, 40) à des tensions de correction au moins temporairement constantes, les tensions de correction étant choisies compte tenu du biais en quadrature à réduire,
**caractérisé en ce que** les tensions de correction auxquelles sont soumises des unités de correction (30, 40) identiques se compensent au total.
